# EUROPEAN PATENT APPLICATION

(11) **EP 4 276 530 A1**
(43) Date of publication of application: **15.11.2023**
(21) Application number: 21917060.2
(22) Date of filing: 12.08.2021
(51) Int. Cl.: G03B 21/60, G03B 21/56

(54) **TILED PROJECTION SCREEN**

(30) Priority: 05.01.2021 CN 202120019973 U
(71) Applicant: Shenzhen Time Waying Technology Co., Ltd., Shenzhen, Guangdong 518000 (CN)
(72) Inventor: WANG, Xiaohu, Shenzhen, Guangdong 518000 (CN); LI, Yanlong, Shenzhen, Guangdong 518000 (CN)
(74) Representative: Zaboliene, Reda
(86) International application number: PCT/CN2021/112245
(87) International publication number: WO 2022/148017

(57) **Abstract**

Embodiments of the present disclosure are applicable to the field of film and television equipment. Provided is a tiled projection screen, including at least two screen plates that are arranged in sequence and tiled with each other. Side walls of two adjacent screen plates are spaced apart to form a seam. The screen plate comprises a reflecting surface for reflecting a projection light ray and a back surface opposite to the reflecting surface. The tiled projection screen further comprises a tiling layers provided at the seam. The tiling layer covers the seam and is bonded to the back surfaces by an adhesive. A plurality of first sound-transmitting holes is formed on the screen plate in an area overlapping with the tiling layer. A plurality of second sound-transmitting holes is formed on the screen plate in an area not overlapping with the tiling layer. The present invention solves the problem that existing projection screen has a significant difference between the reflectivity of a tiling area and the reflectivity of a non-tiling area.

## Description

### TECHNICAL FIELD

The present invention relates to the technical field of film and television equipment, in particular to a tiled projection screen.

### BACKGROUND

Metal-coated silver screens have been used for screening of 3D movies in cinemas for many years. Traditional metal-coated silver screen uses PVC as the substrate and sprays a mixture of organic solvent and aluminum powders on a surface of the substrate. After the organic solvent volatilizes, the aluminum powders adhere to the surface of the PVC substrate uniformly, thereby forming a metal reflective layer. The metal-coated silver screen made by traditional spraying process is low in reflectivity, and has a polarization contrast generally being 150:1, which is prone to generate image crosstalk of left and right eyes during screening of 3D movie, and has a low brightness. In recent years, rigid screen technology based on materials such as PET has been developed, with a metal reflective layer formed by magnetron sputtering or evaporation, which greatly improves the reflectivity and polarization contrast. However, for the projection screen in the related art, there is a significant difference between a reflectivity of a tiling area and a reflectivity of a non-tiling area, which affects a projection effect thereof.

### SUMMARY OF THE INVENTION

### TECHNICAL PROBLEM

The technical problem to be solved by embodiments of the present invention is to provide a tiled projection screen, aiming to solve the problem that there is a significant difference between a reflectivity of a tiling area and a reflectivity of a non-tiling area in the existing projection screen.

### SOLUTION TO THE PROBLEM

### TECHNICAL SOLUTION

Embodiments of the present invention are achieved as follows: a tiled projection screen includes at least two screen plates arranged in sequence and tiled with each other, side walls of two adjacent screen plates being spaced apart to form a seam, the screen plate including a reflecting surface for reflecting projection light ray and a back surface opposite to the reflecting surface; a tiling layer being provided at the seam, the tiling layer covering the seam and bonded to the back surfaces by an adhesive;

a plurality of first sound-transmitting holes being defined in the screen plate at an area thereof overlapping with the tiling layer, and a plurality of second sound-transmitting holes being defined in the screen plate at an area thereof not overlapping with the tiling layer.

Furthermore, the adhesive penetrates into the seam.

Furthermore, the first sound-transmitting holes and the second sound-transmitting holes are uniformly arranged in the screen plate.

Furthermore, a plurality of third sound-transmitting holes is defined in and extends through the tiling layer.

Furthermore, the adhesive penetrates into the third sound-transmitting holes.

Furthermore, the screen plate further includes opposite first side face and second side face that interconnect the reflecting surface and the back surface; a connecting line of the first side face and the second side face is perpendicular to a splicing direction of two adjacent screen plates, and the tiling layer extends from the first side face to the second side face with two end faces thereof being flush with the first side face and the second side face, respectively.

Furthermore, a width of the seam is less than 0.5mm, and a width of the tiling layer along a splicing direction of two adjacent screen plates ranges from 0.5mm to 30mm.

Furthermore, a total area of portions of the reflecting surface penetrated by the plurality of first and second sound-transmitting holes is 0.5% to 10% of an area of the reflecting surface.

Furthermore, the total area of the portions of the reflecting surface penetrated by the plurality of first and second sound-transmitting holes is 4.5% to 7% of the area of the reflecting surface.

### BENEFICIAL EFFECTS OF THE INVENTION

### BENEFICIAL EFFECTS

Compared with the prior art, embodiments of the present invention has the following beneficial effects: for the present invention, the screen plates are provided with sound-transmitting holes at an area thereof overlapping with the tiling layer and an area thereof not overlapping with the tiling layer, so that dust accumulated on the reflecting surface is uniformly distributed during long-term use of the silver screen, which avoids a reflectivity difference being generated between the area of the screen plate overlapping with the tiling layer and the area of the screen plate not overlapping with the tiling layer, thereby improving a projection effect.

### BRIEF DESCRIPTION OF THE DRAWINGS

### DESCRIPTION OF THE DRAWINGS

FIG. 1 is a schematic, overall structure view of a tiled projection screen provided by an embodiment of the present invention.
FIG. 2 is a schematic, cross-sectional view of FIG.1, taken along A-A.
FIG. 3 is a schematic, enlarged view of a portion C of FIG. 2.
FIG. 4 is a schematic, overall structure view of a tiled projection screen provided by another embodiment of the present invention.
FIG. 5 is a schematic, cross-sectional view of FIG.4, taken along D-D.
FIG. 6 is a schematic, enlarged view of a portion E of FIG. 5.
FIG. 7 is a schematic, overall structure view of FIG. 1 from another aspect.
FIG. 8 is a schematic, cross-sectional view of FIG. 7, taken along B-B.

In the drawings, the reference signs represent:
100, screen plate;
200, seam;
101, reflecting surface;
102, back surface;
300, tiling layer;
401, first sound-transmitting hole;
402, second sound-transmitting hole;
403, third sound-transmitting hole;
500, adhesive;
103, first side face;
104, second side face.

### PREFERRED EMBODIMENTS OF THE INVENTION

### DESCRIPTION OF THE EMBODIMENTS

In order to make the objects, technical solutions and advantages of the present invention clearer, the present invention will be further described in details with reference to the drawings and embodiments. It should be understood that the specific embodiments described here are only used to explain the present invention and not intended to limit the present invention.

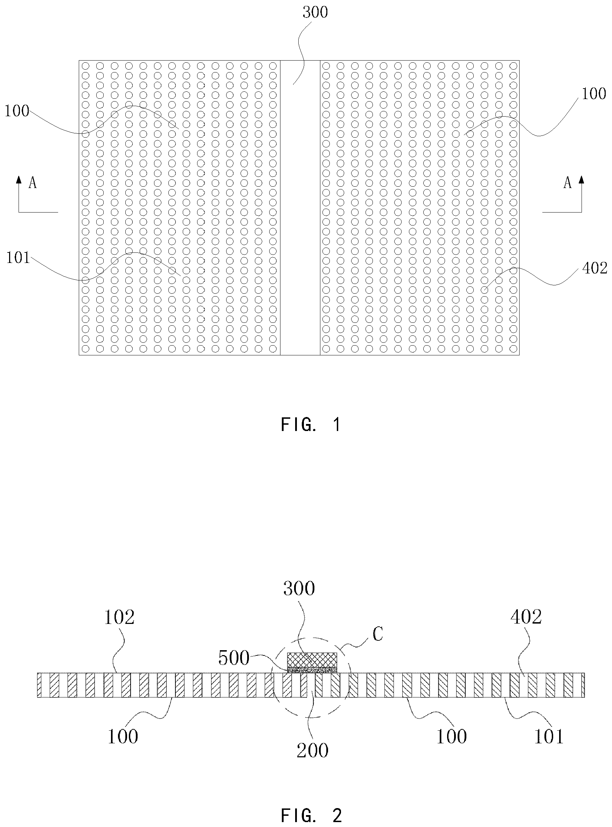

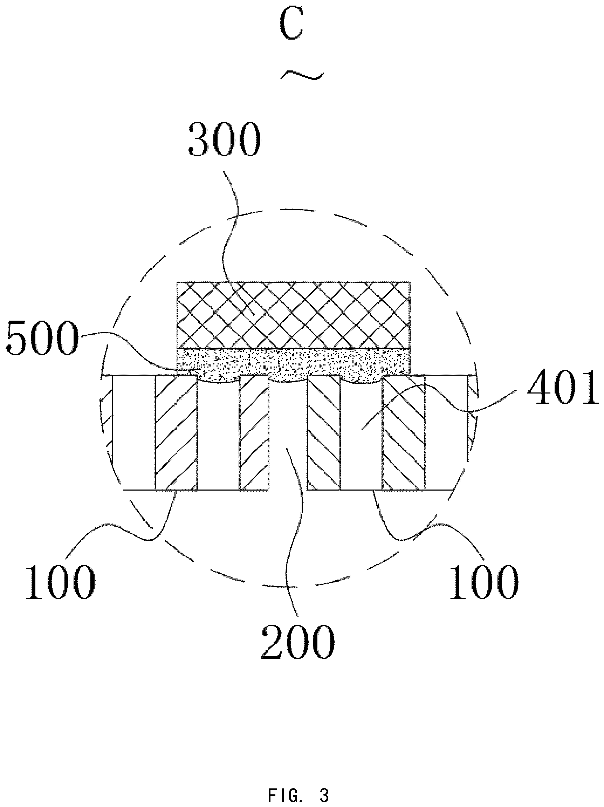

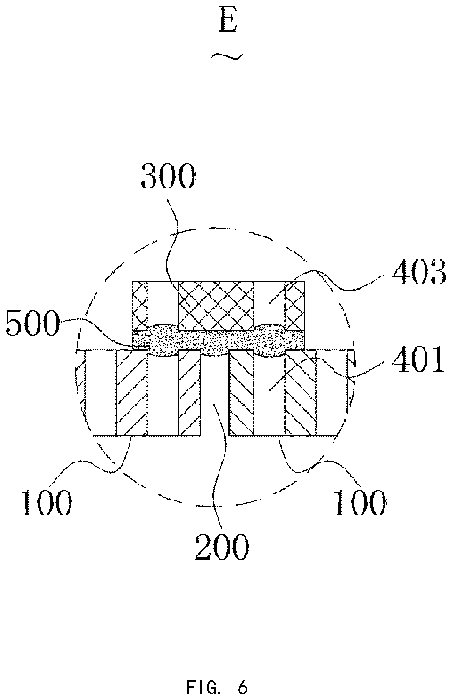

As shown in FIG. 1 to FIG. 8, which shows a tiled projection screen provided by an embodiment of the present invention. The tiled projection screen includes at least two screen plates 100 arranged in sequence and tiled with each other. Side walls of two adjacent screen plates 100 are spaced apart to form a seam 200. The screen plate 100 includes a reflecting surface 101 for reflecting projection light ray and a back surface 102 opposite to the reflecting surface 101. The tiled projection screen further includes a tiling layer 300 provided at the seam 200. The tiling layer 300 covers the seam 200, and is bonded to the back surfaces 102 by means of an adhesive 500.

Referring to FIG. 1 to FIG. 3, a plurality of first sound-transmitting holes 401 is defined in the screen plate 100 at an area thereof overlapping with the tiling layer 300, and a plurality of second sound-transmitting holes 402 is defined in the screen plate 100 at an area thereof not overlapping with the tiling layers 300. For the screen plate 100 of the present invention is provided with sound-transmitting holes at both the area overlapping with the tiling layer 300 and the area not overlapping with the tiling layer 300, dust accumulated on the reflecting surface 101 is uniformly distributed during long-term use of the silver screen, which avoids a difference of reflectivity being generated between the area of the screen plate 100 overlapping with the tiling layer 300 and the area of the screen plate 100 not overlapping with the tiling layer 300, thereby improving a projection effect.

In this embodiment, when the tiling layer 300 is bonded to the back surfaces 102 of the screen plates 100 through the adhesive 500, the adhesive 500 penetrates into the seam 200. After the adhesive 500 being solidified, it can significantly improve an adhesion between the tiling layer 300 and the screen plate 100, thereby enhancing the strength and tensile capacity at the seam 200 and preventing the seam 200 from cracking during using of the silver screen. In addition, the adhesive 500 may penetrate not only into the seam 200, but also into the first sound-transmitting holes 401, further increasing the adhesion between the tiling layer 300 and the screen plates 100, which can further enhance the strength and tensile capacity at the seam 200.

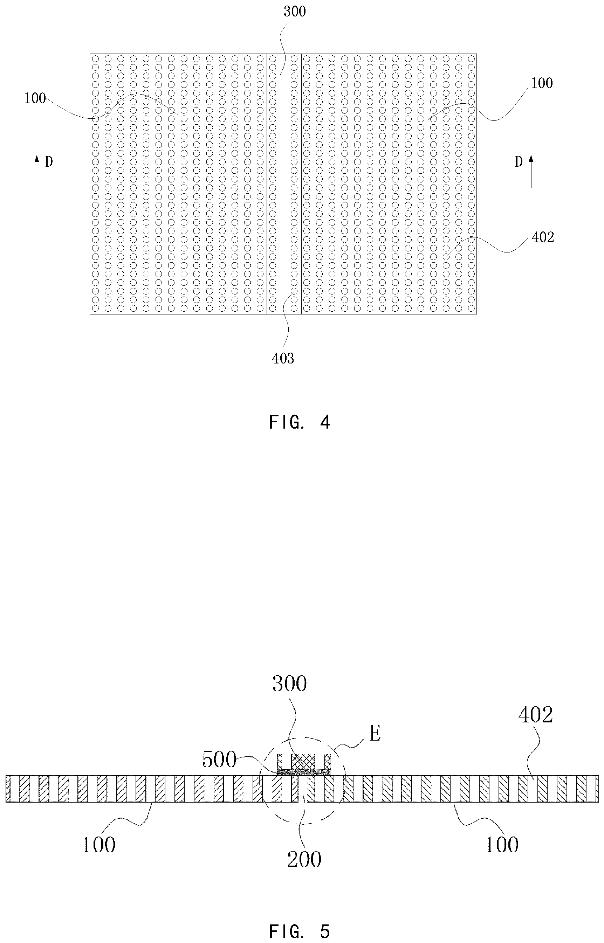

In addition, as shown in FIG. 4 to FIG. 6, a plurality of third sound-transmitting holes 403 is defined in the tiling layer 300, and extends through the tiling layer 300. When the tiling layer 300 is bonded to the back surfaces 102 of the screen plates 100 by the adhesive 500, the adhesive 500 not only penetrates into the seam 200 and the first sound-transmitting holes 401, but also penetrates into the third sound-transmitting holes 403, further increasing the adhesion between the tiling layer 300 and the screen plates 100, making the tiled projection screen more secure. Preferably, the third sound-transmitting hole 403 is aligned with the first sound-transmitting hole 401, thereby enhancing a sound-transmitting effect of the screen plates 100. Of course, the third sound-transmitting hole 403 may not be aligned with the first sound-transmitting hole 401.

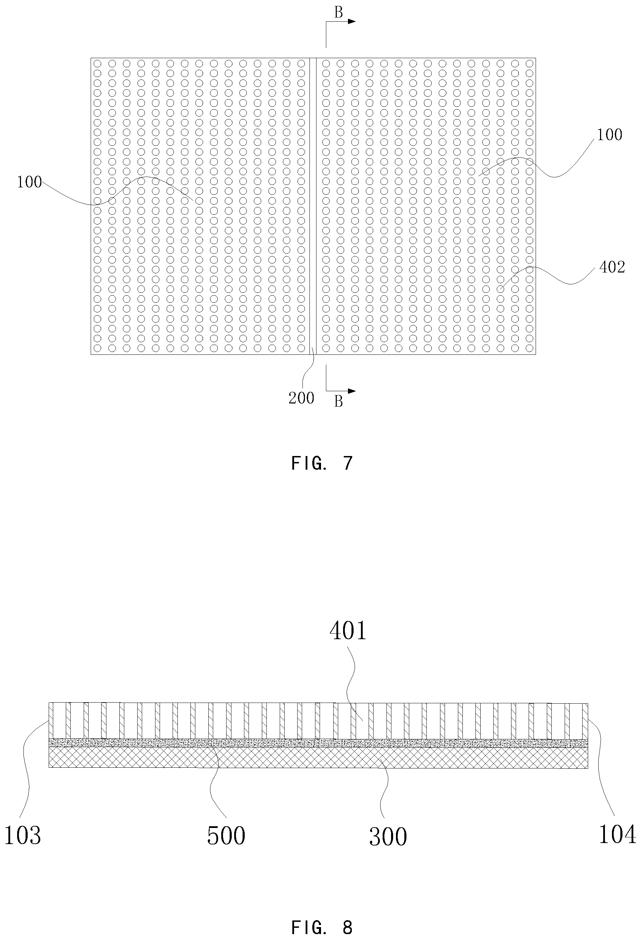

As shown in FIG. 7 and FIG. 8, the screen plate 100 of this embodiment includes opposite first side face 103 and second side face 104 that interconnect the reflecting surface 101 and the back surface 102. A connecting line of the first side face 103 and the second side face 104 is perpendicular to a splicing direction of two adjacent screen plates 100. The tiling layer 300 extends from the first side face 103 to the second side face 104, with two end faces thereof being flush with the first side face 103 and the second side face 104, respectively, which ensures that the tiling layer 300 fully covers an area with the seam 200, further enhancing the strength and tensile capacity at the seam 200.

In this embodiment, a width of the seam 200 is less than 0.5mm, and a width of the tiling layer 300 along the splicing direction of two adjacent screen plates 100 ranges from 0.5mm to 30mm. That is, the width of the tiling layer 300 is greater than the width of the seam 200. The width of the seam 200 is small enough to ensure the firmness of the splicing while also avoiding the audience from seeing the area with the seam 200 from the front of the silver screen. In addition, a total area of portions of the reflecting surface 101 penetrated by the plurality of first sound-transmitting holes 401 and second sound-transmitting holes 402 is 0.5% to 10% of an area of the reflecting surface 101. Further, the total area of the portions of the reflecting surface 101 penetrated by the plurality of first sound-transmitting holes 401 and second sound-transmitting holes 402 is 4.5% to 7% of the area of the reflecting surface 101..

In summary, embodiments of the present invention are provided with sound-transmitting holes in areas where the screen plate 100 overlaps with the tiling layer 300 and does not overlap with the tiling layer 300, so that dust accumulated on the reflecting surface is uniformly distributed during long-term use of the silver screen, which avoids a reflectivity difference being generated between the area of the screen plate 100 overlapping with the tiling layer 300 and the area of the screen plate 100 not overlapping with the tiling layer 300, thereby improving the projection effect.

The above is only preferred embodiments of the present invention, which is not intended to limit the present invention. Any modifications, equivalent substitutions, and improvements made without departing from the spirit and principles of the present invention should be within the scope of protection of the present invention.

The above is only preferred embodiments of the present invention and is not intended to limit it. Any modifications, equivalent replacements, and improvements made within the spirit and principles of the present invention should be included in the scope of protection of the present invention.

## Claims

1. A tiled projection screen, comprising:
at least two screen plates (100) arranged in sequence and tiled with each other, side walls of two adjacent screen plates (100) being spaced apart to form a seam (200), the screen plate (100) comprising a reflecting surface (101) for reflecting projection light ray and a back surface (102) opposite to the reflecting surface (101);
a tiling layer (300) being provided at the seam (200), the tiling layer (300) covering the seam (200) and bonded to the back surfaces (102) by an adhesive (500);
a plurality of first sound-transmitting holes (401) being defined in the screen plate (100) at an area thereof overlapping with the tiling layer (300), and a plurality of second sound-transmitting holes (402) being defined in the screen plate (100) at an area thereof not overlapping with the tiling layer (300).

2. The tiled projection screen as claimed in claim 1, wherein the adhesive (500) penetrates into the seam (200).

3. The tiled projection screen as claimed in claim 1, wherein the first sound-transmitting holes (401) and the second sound-transmitting holes (402) are uniformly arranged in the screen plate (100).

4. The tiled projection screen as claimed in claim 1, wherein a plurality of third sound-transmitting holes (403) is defined in and extends through the tiling layer (300).

5. The tiled projection screen as claimed in claim 4, wherein the adhesive (500) penetrates into the third sound-transmitting holes (403).

6. The tiled projection screen as claimed in claim 1, wherein the screen plate (100) further comprises opposite first side face (103) and second side face (104) that interconnect the reflecting surface (101) and the back surface (102); a connecting line of the first side face (103) and the second side face (104) is perpendicular to a splicing direction of two adjacent screen plates (100), and the tiling layer (300) extends from the first side face (103) to the second side face (104) with two end faces thereof being flush with the first side face (103) and the second side face (104), respectively.

7. The tiled projection screen as claimed in any one of claims 1 to 6, wherein a width of the seam (200) is less than 0.5mm, and a width of the tiling layer (300) along a splicing direction of two adjacent screen plates (100) ranges from 0.5mm to 30mm.

8. The tiled projection screen as claimed in any one of claims 1 to 6, wherein a total area of portions of the reflecting surface (101) penetrated by the plurality of first sound-transmitting holes (401) and second sound-transmitting holes (402) is 0.5% to 10% of an area of the reflecting surface (101).

9. The tiled projection screen as claimed in claim 8, wherein the total area of the portions of the reflecting surface (101) penetrated by the plurality of first sound-transmitting holes (401) and second sound-transmitting holes (402) is 4.5% to 7% of the area of the reflecting surface (101).
